# EUROPÄISCHE PATENTSCHRIFT

(11) **EP 2 826 692 B1**
(45) Veröffentlichungstag und Bekanntmachung des Hinweises auf die Patenterteilung: **29.11.2017**
(21) Anmeldenummer: 14175524.9
(22) Anmeldetag: 03.07.2014
(51) Int. Cl.: B61G 11/18, F16K 51/02, F16K 15/18, F16K 17/04, F16K 27/02, F16K 27/07, B61D 7/02

(54) **Zwangsbelüftungs- und Vakuum-Sicherheitsventil**
Forced air ventilation and vacuum safety valve
Soupape de sécurité à vide et à ventilation forcée

(30) Priorität: 09.07.2013 DE 102013213408
(43) Veröffentlichungstag der Anmeldung: 21.01.2015
(73) Patentinhaber: Waggonbau Graaff GmbH, 31008 Elze (DE)
(72) Erfinder: Pana, Constantin, 31008 Elze (DE)
(74) Vertreter: Lüdtke, Frank

(56) Entgegenhaltungen:
- FR-A- 1 056 247
- US-A- 5 244 181
- US-B1- 6 454 237

## Beschreibung

Die Erfindung betrifft ein Zwangsbelüftungs- und Vakuum-Sicherheitsventil für einen Tank für die Beförderung gefährlicher Güter nach den Merkmalen des ersten Patentanspruches.

Die Erfindung ist überall dort einsetzbar, wo Zwangsbelüftungsventile und Vakuum-Sicherheitsventile an einem Tank für die Beförderung gefährlicher Güter gemäß des Europäischen Übereinkommens über die internationale Beförderung gefährlicher Güter auf Schienen und Straßen (REDADR) und der Ordnung über die internationale Eisenbahnbeförderung gefährlicher Güter (RID) eingesetzt werden. Tanks, insbesondere Tanks für Kesselwagen, in denen gefährliche Güter transportiert werden, weisen ein Zwangsbelüftungsventil und ein Vakuum-Sicherheitsventil auf. Die Aufgabe eines Vakuum-Sicherheitsventils ist es, bei einem Über- oder einem Unterdruck in einem Tank- oder Kesselwagen eine Öffnung freizugeben, durch die bei einem Unterdruck Gas in einen Tank-oder Kesselwagen eintreten kann.

Zwangsbelüftungsventile in Tanks von Tank- oder Kesselwagen sind vorhanden, damit bei einem Unterdruck im Tank- oder Kesselwagen durch Öffnen des Ventils mittels einer Betätigung Luft in den Tank- oder Kesselwagen strömen kann.

Damit gefährliche Güter durch das Ventil am Tank- oder Kesselwagen nicht in die Umgebung austreten können, müssen diese mittels eines Anschlusses an eine Gaspendelleitung anschließbar sein, durch die die gefährlichen Güter aus dem Tank- oder Kesselwagen entweichen und entsorgt werden können.

Das Entleeren von Tanks von Tank- oder Kesselwagen kann auf unterschiedliche Weise erfolgen. Zum einen kann in einem unteren Bereich des Tanks ein Ventil angeordnet sein, durch dessen Öffnung das gefährliche Gut aus dem Tank abfließen kann. Dieses Ventil kann mit einem Zwangsentlüftungsventil an der Oberseite des Tanks, beispielsweise mittels Seilzuges, verbunden sein, so dass beim Öffnen des Auslassventils am Tank das Zwangsbelüftungsventil geöffnet wird, so dass kein Unterdruck im Tank entsteht.

Eine andere Möglichkeit besteht darin, den Tank des Tank- oder Kesselwagen mit einem Steigrohr zu entleeren, durch das das gefährliche Gut abgesaugt wird. In diesem Fall wird in der Regel das Zwangsbelüftungsventil nicht geöffnet, so dass sich bei einem entstehenden Unterdruck das Vakuum-Sicherheitsventil öffnet, so dass Luft in den Tank fließen kann, wo dann Unterdruck abgebaut wird. Der Unterdruck im Tank darf nach bestehenden Vorschriften nicht weniger als 0,21 bar betragen. Auf diesen Druck werden die Vakuum-Sicherheitsventile eingestellt. Ein Verstellen am Ventilkörper ist bei herkömmlichen Vakuum-Sicherheitsventilen auf einfache Weise nicht möglich.

Die derzeitig nach dem Stand der Technik bekannten Zwangsentlüftungs- und Vakuum-Sicherheitsventile weisen den Nachteil auf, dass diese aus Gehäusen bestehen, die aus Einzelteilen zusammengeschweißt werden. Bei der derzeitig bekannten Bauweise verläuft der Ventiltellerschaft durch den Ventilteller und erfordert eine besondere Dichtung, da sonst das Ventil Undichtheiten aufweist. Weiterhin sind die Ventile nicht problemlos exakt auf einen gewünschten Überdruck einstell- und umstellbar. Darüber hinaus bestehen Probleme, die Gaspendelleitung schnell und günstig an das Ventil anzuschließen. Weiterhin weisen die bekannten Ventile eine erhebliche Bauhöhe über dem Tank auf.

Sofern am Ventil eine Vorrichtung zur Schnellentlüftung angeordnet ist, kann diese nur von einer Seite betätigt werden. Das Betätigen von anderer Seite erfordert in der Regel ein Umdrehen des Ventils bzw. das Anbringen eines weiteren Halters.

FR 1 056 247 A offenbart ein Zwangsentlüftungs- und Vakuum-Sicherheitsventil für einen Tank für die Beförderung gefährlicher Güter, bestehend aus einem Gehäuse mit eine Rohr für einen Anschluss für eine Gaspendelleitung und eine unteren Öffnung, die nach der Seite ausläuft. Weiterhin ist ein Ventilteller zum Verschließen der Öffnung angeordnet, der gegen die Kraft eine Feder wirkt. Eine Mutter zum verstellen der Federkraft ist oberhalb des Ventildeckels angeordnet und damit zugänglich und von außen verstellbar, oder erst nach Demontage des Ventils verstellbar. Der Ventilkörper weist nur eine obere und eine seitliche Öffnung auf.
US 5 244 181 A beschreibt ein Zwangsentlüftungsventil mit einem über eine Feder verstellbarem Druckteil. Das Gehäuse weist eine obere und eine seitliche Öffnung auf. Die Feder befindet sich in einem separaten Gehäuse und ist nach dessen Abschrauben verstellbar. Das Ventil wird über einen Hebel geöffnet.

Ausgehend von diesem Stand der Technik ist es Aufgabe der Erfindung, ein Ventil mit geringerer Bauhöhe zu entwickeln, welches einfach auf einen vorgegebenen Druck ein- und umgestellt werden kann, unkompliziert und sicher an eine Gaspendelleitung anschließbar ist, wobei die Fertigung und der Zusammenbau des Ventils einfach sein soll, und eine Betätigung für eine Zwangsentlüftung so anbringbar sein soll, dass das Ventil von beiden Seiten - links und rechts - betätigbar ist.

Diese Aufgabe wird durch ein Zwangsbelüftungs- und Vakuum-Sicherheitsventil für einen Tank nach den Merkmalen des ersten Patentanspruches gelöst.

Unteransprüche geben vorteilhafte Ausgestaltungen der Erfindung wieder.

Die erfindungsgemäße Lösung sieht ein Ventil vor, welches das Zwangsbelüftungsventil mit einem Vakuum-Sicherheitsventil für einen Tank- oder Kesselwagen für die Beförderung gefährlicher Güter kombiniert.

Das Zwangsbelüftungs- und Vakuum-Sicherheitsventil besteht aus einem gegossenen Gehäuse mit einem Anschluss für eine Gaspendelleitung und einer weiteren Öffnung im unteren Teil des Gehäuses, durch welches Luft in den Tank eindringen kann, wenn ein vorgegebenes Vakuum erreicht ist. Das gegossene Gehäuse ist nach oben mit einem Deckel verschlossen, wobei zwischen dem Deckel und dem Gehäuse eine Dichtung angeordnet ist. Das Verschließen des Gehäuses mit dem Deckel ist erforderlich, damit dieses geöffnet werden kann, so dass ein Einstellen des Auslösedruckes an einem dafür vorgesehenen Mechanismus im Gehäuse stattfinden kann.
Um das Ventil mit Befestigungsmitteln wie Schrauben am Tank oder einem Kessel zu befestigen und damit den Tank zu verschließen, weist das Ventil einen Anschlussflansch auf.

Nach unten wird die nach unten angeordnete Öffnung im Gehäuse durch einen Ventilteller verschlossen, der einen Schaft aufweist, der an einer Führung verschiebbar befestigt ist, wobei die Führung im Gehäuse befestigt ist.

In vorteilhafter Weise kann die Führung ein Schraubengewinde aufweisen, mit dem diese in das Gehäuse eingeschraubt ist. Andere Befestigungsarten sind denkbar.

Das Gehäuse kann an einer Unterseite eine Trennwand aufweisen, in der die Führung befestigt ist. Am oberen Ende der Führung, welche einen geraden Bolzen darstellt, ist ein verstellbares Druckstück angeordnet. Das Druckstück kann eine runde Metallscheibe darstellen. Zwischen dem verstellbaren Druckstück und der Unterseite des Gehäuses, die eine Trennwand bilden kann, ist eine Druckfeder angeordnet, die zwischen der Trennwand und dem verstellbaren Druckstück wirkt und mit ihrer Kraft den Ventilteller von unten gegen das Gehäuse drückt und das Gehäuse des Ventils auf diese Weise gegen die Kraft der Feder geschlossen hält. Am oberen Ende des Ventilschaftes ist ein Verstellmechanismus angeordnet. Das kann in vorteilhafter Weise ein Schraubengewinde mit einer Mutter und einer Kontermutter sein. Mit diesen Muttern kann das Druckstück gegen die Kraft der Druckfeder nach unten geschraubt werden, so dass die Federkraft erhöht wird, was eine Erhöhung des Auslösedruckes zur Folge hat.

Zwischen der Führung und dem Schaft des Ventils sind in vorteilhafter Weise Führungsringe, z. B. zwei Führungsringe, angeordnet. Dabei kann es sich um Kolbführungsringe handeln, die dafür sorgen, dass der Schaft des Ventils mit geringer Reibung des Ventils nach oben oder unten bewegbar ist.

Schaft des Ventils und Ventilteller sind miteinander verbunden. Diese Verbindung kann eine stoffschlüssige Verbindung wie eine Schweiß- oder Lötverbindung darstellen.

Am Ventilteller ist ein Steg angeordnet, an den eine Betätigung für eine Zwangsentlüftung angeschlossen werden kann.

Weiterhin ist am Gehäuse ein Halter angeordnet. Dieser Halter kann angegossen oder in einer formschlüssigen oder einer anderen Verbindung am Gehäuse angeordnet sein. Er dient dazu, eine Betätigung der Zwangsentlüftung am Ventil anzuordnen. In vorteilhafter Weise sind zwei sich gegenüberliegende Halter am Gehäuse angeordnet, so dass die Betätigung so angeordnet werden kann, dass ein Ende der Betätigung in jeweils beide Seiten - links oder rechts - wirken kann.

Um die Zwangsentlüftung zu betätigen ist am Steg des Ventiltellers eine Betätigung angeordnet, die einen Hebel darstellt, der in etwa in seiner Mitte ein Loch aufweist, durch das er beweglich mit dem Steg über einen Bolzen, eine Schraube, eine Achse o. ä. verbunden ist. Die Betätigung weist an ihren beiden Enden Öffnungen auf, wobei die eine Öffnung über einen Bolzen, eine Schraube oder ähnliches mit dem Halter am Gehäuse verbunden ist und die Öffnung am anderen Ende der Betätigung mit einem Seilzug. Dieser Seilzug oder ein anderer Betätigungsmechanismus dient dazu, den Ventilteller gegen die Kraft der Feder manuell oder auf andere Weise nach unten zu ziehen, um damit das Ventil zu öffnen.

Der Anschluss für die Gaspendelleitung wird gegenüber dem Schaft im Gehäuse in im Wesentlichen waagerechter Richtung geführt und weist im Bereich des Schaftes eine ovale oder konische Form auf. Der Flansch oder das Rohr des Anschlusses des Gehäuses weist an seinem Ende eine runde Form auf. Mit dem Rohr des Anschlusses des Gehäuses ist die Gaspendelleitung verschraubbar. Die Länge des Rohres im Gehäuse zum Anschluss der Gaspendelleitung ist größer, als der äußere Durchmesser des Rohres des Gehäuses. Das hat den Vorteil, dass der Steg Dimensionen aufweist, die ein leichtes und behinderungsfreies Anschließen der Gaspendelleitung ermöglicht.

Weiterhin ist das Rohr für den Anschluss der Gaspendelleitung in dem Anschlussflansch des Gehäuses abgesenkt ausgeführt. Damit weist der Umfang des Anschlussflansches eine Lücke auf, d. h. ein Segment fehlt. Die Befestigungen auf dem Umfang des Anschlussflansches sind dementsprechend so anzuordnen, dass das für die Befestigung und Dichtheit der Verbindung unerheblich ist.

Weiterhin sind die Befestigungen, z. B. Schrauben, am Anschlussflansch am Anschluss für die Gaspendelleitung so angeordnet, dass eine einfache Montage möglich ist.

Die erfindungsgemäße Lösung hat den Vorteil, dass die Funktionen eines Zwangsbelüftungsventils und eines Vakuum-Sicherheitsventils an einem Tank oder einem Kesselwagen von einem einzigen Ventil ausgeführt werden, wobei der Auslösepunkt des Vakuum-Sicherheitsventils auf einfache Weise schnell und sicher eingestellt werden kann, eine Betätigung für die Zwangsentlüftung variabel am Ventil anordenbar ist und eine Gaspendelleitung einfach und sicher am Anschluss des Ventils anbringbar ist, wobei Undichtigkeiten zwischen Schaft und Ventilteller nicht auftreten können und das Ventil ein geringeres Gewicht und eine geringere Bauhöhe aufweist.

Im Folgenden wird die Erfindung an fünf Figuren und einem Ausführungsbeispiel näher erläutert. Die Figuren zeigen:
- Figur 1:: Ansicht auf das erfindungsgemäße Ventil von oben
- Figur 2:: Schnitt A-A gemäß Figur 1
- Figur 3:: Schnitt B-B gemäß Figur 1
- Figur 4:: Ansicht C gemäß Figur 1
- Figur 5:: Schnitt A-A gemäß Figur 1 mit einer Betätigung.

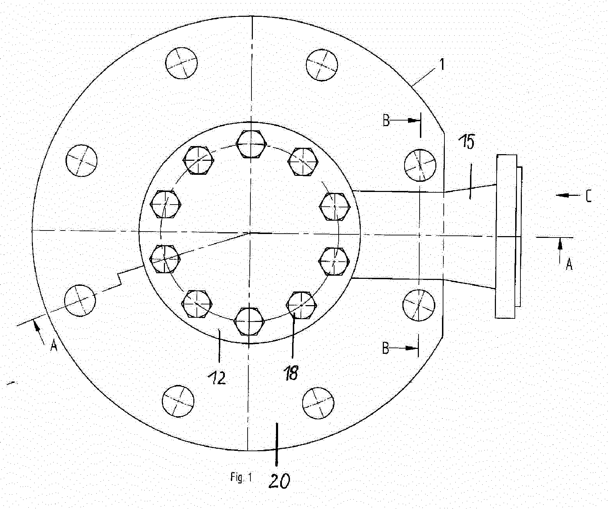

Die *Figur 1* zeigt eine Ansicht auf das erfindungsgemäße Ventil von oben mit dem Gehäuse 1, welches gegossen ist und Bohrungen im Anschlussflansch 20 aufweist, um am Kessel befestigt zu werden. Das Gehäuse 1 ist mit einem Deckel 12 mittels Schrauben 18 verschlossen. Unterhalb des Deckels 12 weist das Gehäuse 1 ein Rohr 15 für den Anschluss für eine Gaspendelleitung auf, wobei sich der Außendurchmesser des Rohres 15 zur Gaspendelleitung hin erweitert, wobei dem Anschlussflansch 20 im Bereich des Rohrs 15 für den Anschlussflansch der Gaspendelleitung ein Kreissegment fehlt, so dass Montagefreiheit am Anschlussflansch 20 am Rohr 15 für die Gaspendelleitung entsteht.

Die Löcher für die Schrauben zum Befestigen des Flansches 20 sind entsprechend angeordnet. Durch diese Anordnung wird die Bauhöhe des Ventils reduziert.

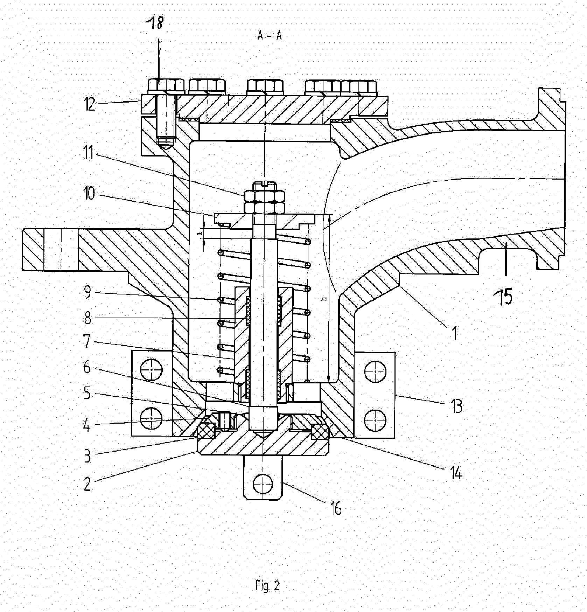

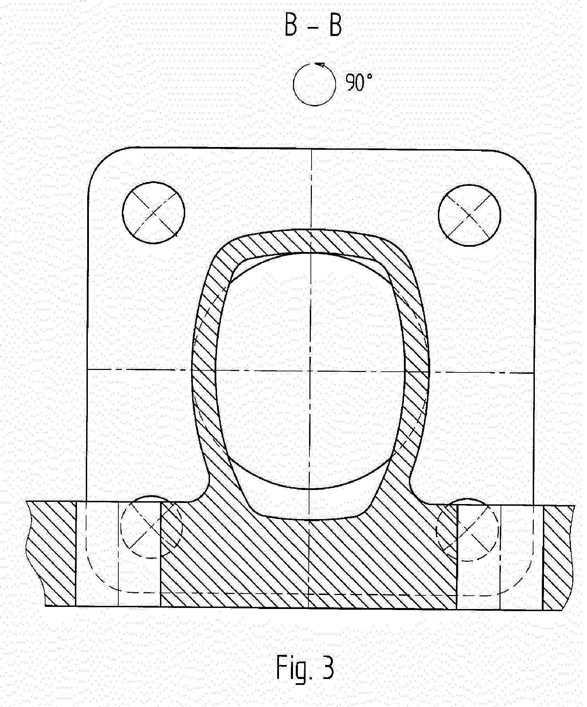

Im Weiteren sind in die Figur 1 die Schnittlinien für Darstellungen A-A und B-B (Figur 2, 3) eingezeichnet.

Die *Figur 2* zeigt den Schnitt A-A gemäß Figur 1 in schematischer Darstellung mit dem Gehäuse 1 und dem im oberen Teil angeordneten Rohr 15 zum Anschluss zur Gaspendelleitung, die zur besseren Montierbarkeit baulich von den weiteren Teilen des Ventils freigehalten ist. Das gegossene Gehäuse 1 ist nach oben mit einem Deckel 12 verschlossen, der mittels Schrauben 18 am Gehäuse 1 befestigt ist, wobei zwischen Gehäuse 1 und Deckel 12 eine Dichtung angeordnet ist. Nach Abnehmen des Deckels 12 besteht die Möglichkeit, eine Mutter 11 über dem Druckstück 10 gegen die Kraft der Feder 9 zu verstellen, so dass eine gewünschte Kraft der Feder 9 einstellbar ist.

In seinem unteren Teil weist das Gehäuse 1 eine Öffnung auf, in der ein Ventilsitz 14 angeordnet ist, in dem sich der Ventilteller 2 befindet, der die Dichtung 3 aufweist und durch die Feder 9 gegen den Ventilsitz 14 gezogen wird und das Ventil auf diese Weise verschließt. Der Ventilteller 2 ist mit dem Schaft 6 verschweißt. Der Schaft 6 wird durch die Führung 7 geführt, die im unteren Teil des Gehäuses 1 verschraubt ist. Die Dichtung 3 am Ventilteller 2 ist auswechselbar und wird durch eine Ringmutter 4 festgehalten, die gegen Selbstdrehung durch Stiftschrauben 5 fixiert ist.

Um ein einwandfreies Gleiten des Schaftes 6 in der Führung 7 zu ermöglichen, sind zwischen Schaft 6 und Führung 7 zwei Kolbführungsringe angeordnet. Die Vorrichtung erlaubt es, das Druckstück 10 in einem Abstand a auf dem Gewinde des Schaftes 6 mittels der Mutter 11 nach unten zu drehen. Je nachdem, um welchen Betrag das Druckstück 10 auf dem Schaft 6 nach unten gedreht wird, ändert sich die Kraft, die erforderlich ist, um den Ventilteller 2 nach unten zu öffnen. Die Mutter 11 kann dann mittels einer weiteren Mutter 11 in der gewünschten Stellung gekontert, also fixiert, werden.

Der Abstand b dient als Parameter zur Einstellung des Ventils.

Die *Figur 3* zeigt den Schnitt B-B gemäß Figur 1 durch das Rohr 15 für den Anschluss zur Gaspendelleitung, der mit vier Bohrungen zum Anschluss der Gaspendelleitung und einem ovalen Querschnitt des Anschlusses in der Schnittebene zu sehen ist.

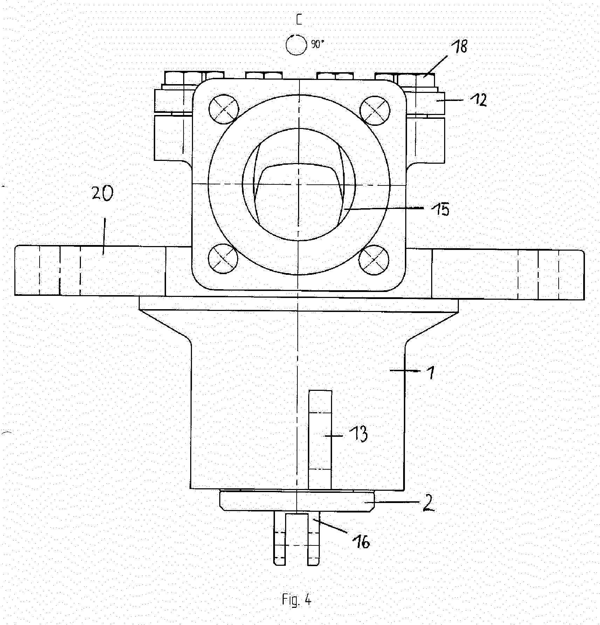

Die *Figur 4* zeigt die Ansicht C gemäß Figur 1, welche die Form des Gehäuses 1 unterhalb des Rohres 15 für den Anschluss für die Gaspendelleitung darstellt. Am Gehäuse 1 ist beidseitig ein Halter 13 angeordnet, der mit dem Steg 16 am Ventilteller 2 zusammenwirkt. Im vorliegenden Fall ist der linke Halter 13 mit der Betätigung 17 verbunden, so dass das Ventil von rechts zu betätigen ist. Sollte eine Betätigung von links erforderlich sein, ist die Betätigung 17 mit der rechten Seite und dem rechten Halter 13 zu verbinden.

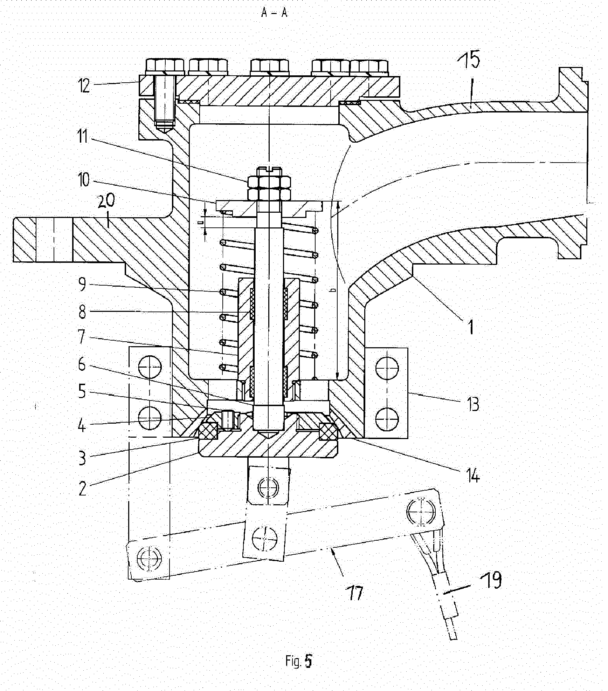

Das Zusammenwirken ist der *Figur 5* zu entnehmen, die eine Betätigung 17 mit einem Seilzug 19 zeigt. Sofern der Seilzug 19 an der Betätigung 19 gezogen wird, kann über diese der Ventildeckel 2 gegen die Kraft der Feder 9 geöffnet werden, was dann erforderlich ist, wenn ein Ventil zum Öffnen des Tanks oder Kessels geöffnet wird und ein Unterdruck durch das Leeren das Tanks oder Kessels entsteht.

### Liste der verwendeten Bezugszeichen

- 1: Gehäuse
- 2: Ventilteller
- 3: Dichtung
- 4: Ringmutter
- 5: Stiftschrauben
- 6: Schaft von 2
- 7: Führung in 1
- 8: Führungsring wie Kolbführungsring
- 9: Feder wie Druckfeder
- 10: Druckstück zwischen 9 und 11
- 11: Mutter
- 12: Deckel von 1
- 13: Halter
- 14: Ventilsitz im Gehäuse
- 15: Rohr für den Anschluss zur Gaspendelleitung
- 16: Steg zum Anschluss der Betätigung
- 17: Betätigung
- 18: Schraube
- 19: Seilzug
- 20: Anschlussflansch von 1
- a: Einstellweg des Distanzstückes
- b: Abstand als Parameter der Einstellung

## Patentansprüche

1. Zwangsentlüftungs- und Vakuum-Sicherheitsventil für einen Tank für die Beförderung gefährlicher Güter, bestehend aus
- einem gegossenen Gehäuse (1) mit einer unteren Öffnung und einem Rohr (15) für einen Anschluss für eine Gaspendelleitung,
- einem Anschlussflansch (20) am Gehäuse (1) für Befestigungen am Tank,
- einem Ventilteller (2) zum Verschließen der unteren Öffnung mit einem Schaft (6) in einer Führung (7) im Gehäuse (1),
- einer Feder (9) zwischen einem verstellbaren Druckstück (10) und einer Innenseite des Gehäuses (1),
- einem Halter (13) am Gehäuse (1) und
- einem Steg (16) am Ventilteller (2), **dadurch gekennzeichnet, dass**
- eine obere Öffnung am Gehäuse (1) nach oben mit einem lösbaren Deckel (12) verschlossen ist, nach dessen Öffnen die Möglichkeit besteht, eine Mutter (11) über dem Druckstück (10) gegen die Kraft der Feder (9) zu verstellen,
- das Gehäuse (1) in seinem unterem Teil die untere Öffnung aufweist, in der ein Ventilsitz (14) angeordnet ist, in dem sich der Ventilteller (2) befindet, der von unten gegen das Gehäuse (1) drückt und dieses durch die Kraft der Feder (9) geschlossen hält, wobei
- die obere und die untere Öffnung einander gegenüberliegend am Gehäuse (1) angeordnet sind.

2. Ventil nach Anspruch 1, **dadurch gekennzeichnet, dass** zwischen dem Steg (16) am Ventilteller (2) und dem Halter (13) am Gehäuse (1) eine Betätigung (17) angeordnet ist.

3. Ventil nach den Ansprüchen 1 und 2, **dadurch gekennzeichnet, dass** der Auslösedruck am Ventilteller mittels des Druckstückes (10) und der Mutter (11) auf einem Gewinde des Schaftes (6) einstellbar ist.

4. Ventil nach einem der Ansprüche 1 bis 3, **dadurch gekennzeichnet, dass** die Führung (7) in das Gehäuse (1) eingeschraubt ist.

5. Ventil nach einem der Ansprüche 1 bis 4, **dadurch gekennzeichnet, dass** zwischen der Führung (7) und dem Schaft (6) zwei Führungsringe (8) angeordnet sind.

6. Ventil nach einem der Ansprüche 1 bis 5, **dadurch gekennzeichnet, dass** zwischen Ventilteller (2) und Gehäuse (1) oder Ventilteller (2) und dem Ventilsitz (14) eine Dichtung (3) angeordnet ist.

7. Ventil nach einem der Ansprüche 1 bis 6, **dadurch gekennzeichnet, dass** zwischen dem Schaft (6) und dem Ventilteller (2) einer stoffschlüssige Verbindung angeordnet ist.

8. Ventil nach einem der Ansprüche 1 bis 7, **dadurch gekennzeichnet, dass** das Rohr (15) für den Anschluss der Gaspendelleitung im Umfang des Anschlussflansches (20) des Gehäuses (1) angeordnet ist.

9. Ventil nach einem der Ansprüche 1 bis 8, **dadurch gekennzeichnet, dass** das Rohr (15) für den Anschluss für eine Gaspendelleitung im Querschnitt oval ausgeführt ist.

10. Ventil nach einem der Ansprüche 1 bis 9, **dadurch gekennzeichnet, dass** am Gehäuse (1) zwei sich gegenüberliegende Halter (13) angeordnet sind.

## Claims

1. Forced venting and vacuum safety valve for a tank for transporting hazardous goods, consisting of
- a cast housing (1) with a lower opening and a pipe (15) for a connection for a gas line,
- a connection flange (20) on the housing (1) for attachments to the tank,
- a valve disc (2) for closing the lower opening with a shaft (6) in a guide (7) in the housing (1),
- a spring (9) between an adjustable pressure piece (10) and an interior of the housing (1),
- a holder (13) on the housing (1) and
- a web (16) on the valve disc (2), **characterised in that**
- an upper opening on the housing (1) is closed above with a detachable cover (12), after opening said cover it is possible to adjust a nut (11) via the pressure piece (10) against the force of the spring (9),
- the housing (1), in its lower part, comprises the lower opening, in which a valve seat (14) is arranged, in which the valve disc (2) is located, said valve disc pushing from below against the housing (1) and holds the housing closed by means of the force of the spring (9), wherein
- the upper and lower opening are arranged opposing each other on the housing (1).

2. Valve according to claim 1, **characterised in that** an actuation means (17) is arranged between the web (16) on the valve disc (2) and the holder (13) on the housing (1).

3. Valve according to claim 1 and 2, **characterised in that** the trigger pressure can be adjusted at the valve disc by means of the pressure piece (10) and the nut (11) on a thread of the shaft (6).

4. Valve according to any one of claims 1 to 3, **characterised in that** the guide (7) can be screwed into the housing (1).

5. Valve according to any one of claims 1 to 4, **characterised in that** two guide rings (8) are arranged between the guide (7) and the shaft (6).

6. Valve according to any one of claims 1 to 5, **characterised in that** a seal (3) is arranged between the valve disc (2) and the housing (1) or the valve disc (2) and the valve seat (14).

7. Valve according to any one of claims 1 to 6, **characterised in that** a materially-bonded connection is arranged between the shaft (6) and the valve disc (2).

8. Valve according to any one of claims 1 to 7, **characterised in that** the pipe (15) for the connection of the gas line is arranged in the circumference of the connection flange (20) of the housing (1).

9. Valve according to any one of claims 1 to 8, **characterised in that** the pipe (15) for the connection for the gas line is oval in the cross-section.

10. Valve according to any one of claims 1 to 9, **characterised in that** two opposing holders (13) are arranged on the housing (1).

## Revendications

1. Clapet de sécurité de ventilation forcée et de vide pour une cuve de transport de produits dangereux, le clapet étant constitué par
- un boîtier moulé (1) avec une ouverture inférieure et un tuyau (15) pour un raccordement d'une conduite d'équilibrage de gaz,
- une bride de raccordement (20) sur le boîtier (1) pour une fixation sur la cuve,
- un disque de clapet (2) pour la fermeture de l'ouverture inférieure avec une tige (6) dans un dispositif de guidage (7) dans le boîtier (1),
- un ressort (9) entre une pièce de pression réglable (10) et une face interne du boîtier (1) ;
- un support (13) sur le boîtier (1) et
- une entretoise (16) sur le disque de clapet (2), **caractérisé en ce que**
- une ouverture supérieure sur le boîtier est fermée vers le haut au moyen d'un couvercle amovible, l'ouverture duquel permet de régler un écrou (11), situé au-dessus de la pièce de pression (10), à l'encontre de la force du ressort (9),
- dans sa partie inférieure, le boîtier (1) présente l'ouverture inférieure, dans laquelle est monté un siège de clapet (14), dans lequel se situe le disque de clapet qui exerce du bas une pression sur le boîtier (1) et maintient celui-ci fermé par l'intermédiaire de la force du ressort (9),
- les ouvertures supérieure et inférieure étant pratiquées dans le boîtier (1) de manière qu'elles soient opposées l'une à l'autre.

2. Clapet suivant la revendication 1, **caractérisé en ce qu'**un élément d'actionnement (17) est monté entre l'entretoise (16) sur le disque de clapet (2) et le support (13) sur le boîtier (1).

3. Clapet suivant les revendications 1 et 2, **caractérisé en ce que** la pression de lancement est réglable au moyen de la pièce de pression (10) sur le disque de clapet et au moyen de l'écrou (11) sur un filetage de la tige.

4. Clapet suivant une des revendications 1 à 3, **caractérisé en ce que** le dispositif de guidage (7) est vissé dans le boîtier (1).

5. Clapet suivant une des revendications 1 à 4, **caractérisé en ce que** deux bagues de guidage (8) sont montées entre le dispositif de guidage (7) et la tige (6).

6. Clapet suivant une des revendications 1 à 5, **caractérisé en ce qu'**un joint d'étanchéité (3) est monté entre le disque de clapet (2) et le boîtier (1) ou entre le disque de clapet (2) et le siège de clapet (14).

7. Clapet suivant une des revendications 1 à 6, **caractérisé en ce qu'**une liaison par pénétration de matière est réalisée entre la tige (6) et le disque de clapet (2).

8. Clapet suivant une des revendications 1 à 7, **caractérisé en ce que** le tuyau (15) pour le raccordement de la conduite d'équilibrage de gaz est monté dans la circonférence de la bride de raccordement (20) du boîtier (1).

9. Clapet suivant une des revendications 1 à 8, **caractérisé en ce que** le tuyau (15) pour le raccordement d'une conduite d'équilibrage de gaz est conçu de manière à présenter une section ovale.

10. Clapet suivant une des revendications 1 à 9, **caractérisé en ce que** deux supports (13), opposés l'un à l'autre, sont montés sur le boîtier (1).
